# EUROPEAN PATENT APPLICATION

(11) **EP 4 675 313 A1**
(43) Date of publication of application: **07.01.2026**
(21) Application number: 24185697.0
(22) Date of filing: 01.07.2024
(51) Int. Cl.: G01S 13/931, G01S 7/41, G01S 17/931, G01S 7/48, G01S 15/931, G01S 7/539, G01S 7/00, G01S 13/86

(54) **SYSTEMS AND METHODS FOR GENERATING LABELLED VEHICLE SENSOR DATA**

(71) Applicant: NXP B.V., 5656 AG Eindhoven (NL)
(72) Inventor: FILIPPI, Alessio, 5656 AE Eindhoven (NL); PANDHARIPANDE, Ashish, 5656 AG Eindhoven (NL); AN, Meichen, 5656 AG Eindhoven (NL); MANDERS, Ted Tedor, 5656AG Eindhoven (NL)
(74) Representative: Hardingham, Christopher Mark

(57) **Abstract**

A computer-implemented method comprising: receiving, at a processor, sensor data generated by at least one distance-ranging sensor on a vehicle within an environment; receiving, at the processor, object data received at the vehicle, the object data originating from a plurality of objects within the environment, wherein the object data comprises location data indicating a respective location of each object and attribute data associated with each respective object; processing the data to determine a possible association between a respective portion of the sensor data and at least one object of the plurality of objects; calculating a confidence value reflecting the reliability of the possible association; if the confidence value exceeds a threshold, labelling the portion of the sensor data with at least a portion of the attribute data of the associated object(s).

## Description

### TECHNICAL FIELD

The present specification relates to computer-implemented methods for generating labelled vehicle sensor data, and computer systems for carrying out such methods.

### BACKGROUND

It is common to train machine learning systems using labelled data sets that are specific to the desired application of the machine learning system. The reliability and accuracy of the trained machine learning system therefore depends on the quality, reliability and accuracy of the labelled data sets used for training.

In the technical field of autonomous vehicle control, machine learning systems are used to replace various cognitive operations of a human operator. For example, a machine learning system is commonly used to review sensor data obtained at the vehicle. Thus, such a machine learning system must be trained using labelled vehicle sensor data.

Typically, obtaining high-quality labelled vehicle sensor data can be a complex, expensive and time-consuming process. Many current approaches involve obtaining sensor data using a test vehicle under different conditions and labelling said sensor data with human annotation or using expensive camera sensors to annotate the sensor data post-processing.

There is therefore a need for an improved method of generating labelled vehicle sensor data.

### SUMMARY

Aspects of the present disclosure are set out in the accompanying independent and dependent claims. Combinations of features from the dependent claims may be combined with features of the independent claims as appropriate and not merely as explicitly set out in the claims.

According to a first aspect of the present disclosure, there is provided a computer-implemented method of generating labelled vehicle sensor data, comprising: receiving, at a processor, sensor data generated by at least one distance-ranging sensor provided on a vehicle within an environment; receiving, at the processor, object data received at the vehicle, the object data originating from a plurality of objects located within the environment, wherein the object data comprises location data indicating a respective location of each object of the plurality of objects in the environment and attribute data associated with each object of the plurality of objects; processing the sensor data and the object data to determine a possible association between a respective portion of the sensor data and at least one object of the plurality of objects; calculating a confidence value reflecting a reliability of the possible association; and in response to the confidence value exceeding a confidence threshold, labelling the respective portion of the sensor data with at least a portion of the attribute data of the at least one object.

The at least one object refers to the at least one object determined to be associated with the respective portion of the sensor data.

It will be appreciated that the vehicle may be any kind of vehicle. Examples of such a vehicle include, but are not limited to, an automotive vehicle, a drone, a robot, or a non-motorised vehicle.

For example, the vehicle may include (but is not limited to) a car, a truck, a motorbike, a boat or a ship, a submarine, an aeroplane, a helicopter, an unmanned aerial vehicle, an aerial or non-aerial drone, a robotic vehicle, a bicycle, etc.

The object data may equivalently be referred to as communication data, as this is data that is communicated from the objects, either directly or indirectly, to the vehicle.

It will be appreciated that, as defined above, the step of generating or collecting the sensor data and the object data does not necessarily form part of the present disclosure. This data can simply be received from a third party. Thus, the method may be entirely computer-implemented.

In some embodiments, the portion of the sensor data may be labelled with the entire (or complete) attribute data of the at least one associated object. Thus, the portion of the attribute data may comprise the entire attribute data.

The attribute data provides data or information relating to at least one attribute of the respective objective of the plurality of objects.

In some embodiments, the attribute data provides data or information relating to a plurality of attributes of the respective objective of the plurality of objects.

Optionally, the method may be an offline process.

Optionally, at least one step of the method may be conducted in real-time.

Optionally, the object data may be received via communication messages received at the vehicle. Thus, the vehicle may receive communication messages providing or comprising the object data.

Processing the sensor data and the object data may involve processing the sensor data and the object data together.

Optionally, the attribute data includes at least one identifier associated with the respective object. The identifier may be indicative of a first attribute, such as an object type.

In some embodiments, the attribute data may consist of an identifier.

Optionally, the attribute data may further include data relating to a second attribute of the respective object.

Optionally, labelling the respective portion of the sensor data with at least a portion of the attribute data may comprise labelling the respective portion of the sensor data with at least one identifier associated with the at least one associated object. Each identifier may be indicative of a respective attribute of the object.

Optionally, a portion of the sensor data may be labelled with more than one identifier.

Optionally, in response to the confidence value being less than the confidence threshold, no label is applied to the respective portion of the sensor data.

Optionally, in response to the confidence value exceeding a confidence threshold the method further comprises adding the labelled sensor data to a database.

Optionally, the attribute data comprises velocity data or speed data associated with the respective object of the plurality of objects.

Optionally, the attribute data comprises positional data and/or orientation data associated with the respective object of the plurality of objects.

Optionally, the attribute data comprises any one or more of the following: an object type or an object classification, an object characteristic or property, an object genus, an object identifier or identification number associated with the respective object. Optionally, in addition to comprising one or more of the preceding group, the attribute data further comprises data relating to at least one further property of the object.

Optionally, the attribute data includes dimensional data relating to the respective object. Thus, the attribute data may provide information indicating a size of the respective obj ect.

It will be appreciated that in some embodiments, the attribute data may relate to a single attribute (e.g. an object type). In other embodiments, the attribute data may relate to two or more attributes (e.g. an object type and an object property, or an object identification number, an object classification, and orientation data relating to the object).

It will be appreciated that different types of attribute data may be provided for different objects of the plurality of obj ects. Attribute data associated with a first object of the plurality of objects may include just an object type (e.g. car, bike, pedestrian). Attribute data associated with a second object of the plurality of objects may include just dimensional data and speed data related to the second object.

Optionally, the sensor data includes point cloud data.

Optionally, the sensor data includes range data, and/or range-Doppler data.

Optionally, the sensor data includes azimuth angle data.

Optionally, the sensor data includes elevation data.

Optionally, the sensor data includes analog-to-digital converter, ADC, data.

Thus, the sensor data may include one or more of the group consisting of: point cloud data, range data, range-Doppler data, azimuth angle data, elevation data and ADC data.

Optionally, processing the sensor data and the object data to determine a possible association between a respective portion of the sensor data and at least one object of the plurality of objects comprises transforming at least one of the sensor data and the location data to have a shared reference frame, thereby allowing the location data to be combined with the sensor data.

The at least one distance-ranging sensor has a known detection range, or a known detection region at a given point in time. Processing the sensor data and the object data to determine a possible association between a respective portion of the sensor data and at least one object of the plurality of objects may further comprise filtering the object data to match object data originating from objects located within the detection range of the at least one distance-ranging sensor to the corresponding sensor data.

Thus, for selected sensor data associated with a given detection range, the method may include filtering the object data received to remove object data originating from objects outside of the detection range.

Optionally, processing the sensor data and the object data to determine a possible association between a respective portion of the sensor data and at least one object of the plurality of objects further comprises clustering the sensor data based on the respective location data and attribute data associated with each object in the detection range of the at least one distance-ranging sensor.

Said clustering may comprise applying a clustering algorithm.

Optionally, processing the sensor data and the object data to determine a possible association between a respective portion of the sensor data and at least one object of the plurality of objects further comprises filtering the sensor data to remove data determined to be associated with static clutter.

Thus, the method may comprise filtering the sensor data to remove data that is determined to not be associated with an object of the plurality of objects.

Optionally, the sensor data received and the object data received each have an associated time indication, and said clustering is performed using sensor data and object data associated with a given time indication, or a given time period/duration.

The clustering may be performed using data sets having a plurality of different time indications, or for a plurality of time snapshots.

Optionally, said clustering is performed at least partially based on one or more of range, Doppler and angle attribute data associated with each object.

Optionally, the object data is received via V2X communication messages and/or C-V2X communication messages. Thus, the object data may be contained within, or provided by, V2X communication messages and/or C-V2X communication messages.

The at least one distance-ranging sensor may be an electromagnetic wave ranging sensor.

Optionally, the at least one distance-ranging sensor comprises a radar sensor.

Optionally, the at least one distance-ranging sensor comprises a LiDAR sensor.

Optionally, the at least one distance-ranging sensor comprises an ultrasound sensor.

The at least one distance-ranging sensor may comprise a plurality of sensors. The plurality of sensors may be the same type of sensor, or a combination of different types of sensor.

Optionally, the sensor data is real-world data generated by the vehicle within a real-world environment and the object data is real-world data received from objects within the real-world environment.

According to a second aspect of the present disclosure, there is provided a method comprising the initial step of capturing the sensor data and/or the object data, and generating labelled vehicle sensor data according to any embodiment or example of the first aspect of the present disclosure.

Thus, the method may comprise capturing sensor data using at least one distance-ranging sensor provided on a vehicle within an environment.

Optionally, the method may further comprise the initial step of receiving, at the vehicle, object data originating from a plurality of objects located within the environment.

The object data may be received at the vehicle via communication messages. Thus, the object data may be contained within, or provided by, communication messages received at the vehicle.

Optionally, object data may be received at the vehicle directly from one or more of the objects. Thus, object data may be directly transmitted from the plurality of objects to the vehicle.

Optionally, object data may be indirectly transmitted from one or more of the objects to the vehicle.

In some embodiments, object data may be transmitted from one or more objects to a base station. The object data may then be transmitted from the base station to the vehicle. It will be appreciated that other types of intermediary receivers and transmitters may be utilised.

According to a third aspect of the present disclosure, there is provided a computing system comprising at least one processor and memory, wherein the memory comprises instructions which, when executed by the processor, cause the processor to carry out the method of any embodiment or example of the first aspect of the present disclosure.

The computing system may comprise a cloud computing system and/or a server located remotely to the vehicle.

Optionally, one or more processors of the computing system may be located remotely to the vehicle.

Optionally, one or more processors of the computing system may be located at, or form part of, the vehicle, such that one or more processors of the computing system may be provided on board the vehicle.

Thus, the method of generating labelled vehicle sensor data may be performed entirely remotely from the vehicle itself, or partially at the vehicle and partially remotely, or entirely at the vehicle.

According to a fourth aspect of the present disclosure, there is provided a vehicle, comprising at least one distance-ranging sensor configured to generate sensor data, at least one processor and memory, wherein the memory comprises instructions which, when executed by the processor, cause the processor to carry out the method of any embodiment or example of the first aspect of the present disclosure.

Thus, in the fourth aspect of the present disclosure, the method of generating labelled vehicle sensor data is performed completely at the vehicle, without use of any remote computing resources or processors.

### BRIEF DESCRIPTION OF THE DRAWINGS

Embodiments of this disclosure will be described hereinafter, by way of example only, with reference to the accompanying drawings in which like reference signs relate to like elements and in which:
**Figure 1** shows an illustration of a vehicle gathering sensor data according to an embodiment of this disclosure;
**Figure 2** shows an illustration of a vehicle gathering sensor data and object data according to an embodiment of this disclosure;
**Figure 3** shows an illustration of a vehicle gathering object data according to another embodiment of this disclosure;
**Figure 4** is a flowchart illustrating a method of generating labelled vehicle sensor data according to an embodiment of the present disclosure;
**Figure 5** is a flowchart illustrating a method of determining a possible association between a portion of the sensor data and at least one object in the environment, according to an embodiment of the present disclosure;
**Figure 6** is a representation of a portion of vehicle sensor data combined with object location data;
**Figure 7A** corresponds to section A from Figure 6 after clustering performed;
**Figure 7B** corresponds to section B from Figure 6 after clustering is performed;
**Figure 8** is a representation of labelled vehicle sensor data that may result from the method of the present disclosure;
**Figure 9** is a flowchart illustrating process steps of a method according to another embodiment of the present disclosure; and
**Figure 10** is a box diagram showing an example of a computing device that may be configured to carry out the method of the present disclosure.

### DETAILED DESCRIPTION

Embodiments of this disclosure are described in the following with reference to the accompanying drawings. It will be appreciated that the drawings are illustrative drawings and features are not shown to scale unless a scale is explicitly indicated.

The following detailed description is merely illustrative in nature and is not intended to limit the embodiments of the subject matter or the application and uses of such embodiments. As used herein, the words "exemplary" and "example" mean "serving as an example, instance, or illustration." Any implementation described herein as exemplary, or an example, is not necessarily to be construed as preferred or advantageous over other implementations.

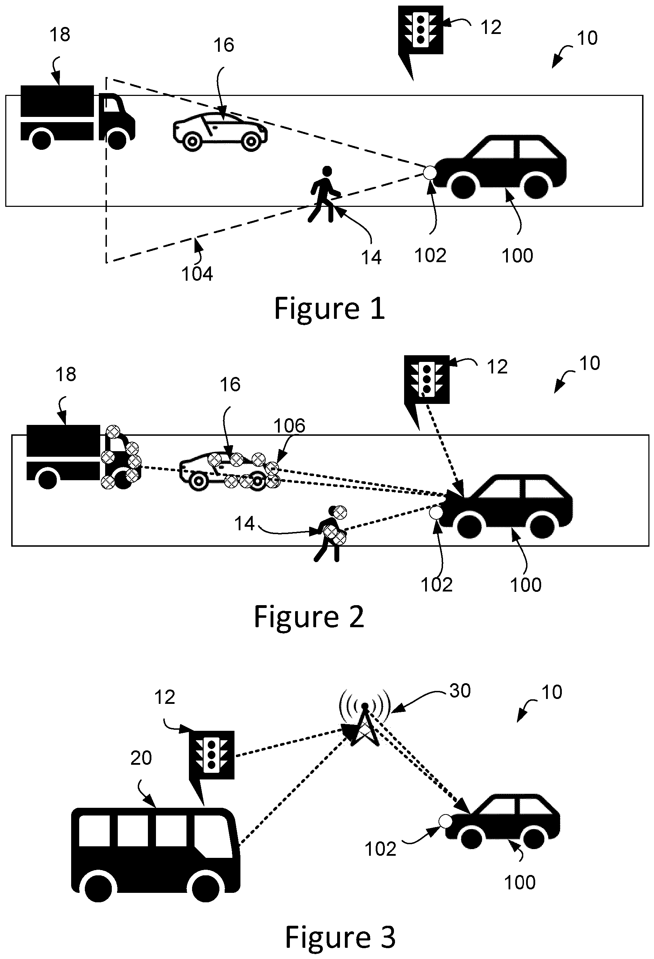

Figure 1 shows a representation of a portion of an environment 10, comprising a vehicle 100, and a plurality of objects comprising traffic lights 12, a pedestrian 14, a car 16 and a truck 18. In this example, the environment 10 is a real-world environment, such as a portion of a public road, as opposed to a virtual or simulated environment. The vehicle 100 may be stationary, or it may be moving within the environment 10. Optionally, the vehicle 100 may be an ego vehicle.

Although vehicle 100 is depicted as a car in Figure 1, it will be appreciated that any kind of vehicle may be provided, such as (but not limited to) an automotive vehicle, a drone, a robot, an airplane, a helicopter, or an aquatic vehicle such as a boat.

The vehicle 100 comprises at least one distance-ranging sensor 102 configured to generate data. In some embodiments, a plurality of sensors 102 may be provided. The at least one distance-ranging sensor 102 has a known detection range 104 (defined relative to the sensor), resulting in a detection region at a given point in time. Each sensor 102 is configured to detect the presence of objects in the detection range 104. In some embodiments, the at least one distance-ranging sensor 102 comprises a radar sensor and/or a LiDAR sensor and/or an ultrasound sensor.

The circles 106 in Figure 2 represent (in a simplified form) an example of the sensor data generated by the at least one distance-ranging sensor 102, which may be point cloud data. As electromagnetic or sound waves transmitted from the at least one sensor 102 rebound from the various objects 14, 16, 18, points are generated in the sensor point cloud data. Point cloud data comprises a discrete set of data points in space. In this example, the sensor data is or comprises point cloud data, but it will be appreciated that the sensor data may comprise any data provided by distance-ranging sensors on a vehicle, such as any combination of one or more of point cloud data, range data, range-Doppler data, range-angle data or ADC data.

In the present disclosure, at least some of the plurality of objects 12, 14, 16, 18 are configured to transmit object data, either directly or indirectly, to the vehicle 100. The object data may be transmitted via communication messages. It will be appreciated that not all objects within a real-world environment are currently able to transmit data, but that objects are increasingly becoming "smart" with the Internet of Things becoming more widespread.

In the present disclosure, the object data includes location data indicating a location of the respective object in the environment, and attribute data associated with the respective object. The location data may be GPS data, or any form of location data indicating the location of the object. The attribute data includes data relating to one or more attributes of the respective object. The one or more attributes may include (but it is not limited to) object type, object speed, object dimensions, object orientation, or other object classifications/properties. The attribute data may include at least one identifier associated with the object. In some embodiments, the attribute data may include a type or classification of the object. For example, in Figure 2, the car 16 may be configured to transmit object data including attribute data stating that the object is a car, or a specific make and model of car, or an object having specific dimensions and/or characteristics.

In Figure 2, the object data is transmitted directly from the objects to the vehicle 100, as shown by the dotted lines. It will be appreciated that the pedestrian 14 may be carrying a mobile phone, or other computing device, configured to transmit object data. In Figure 2, the object data may be transmitted via V2X communication messages. As shown in Figure 2 by the traffic lights 12 transmitting object data to the vehicle 100, object data may be received from objects that are outside of the detection range 104 of the sensor.

In Figure 3 the plurality of objects comprises a bus 20 and traffic lights 12. The sensor data may be collected as described in connection with Figures 1 and 2. Object data is transmitted from the objects 12, 20 to a base station 30, as shown by the dotted lines. The base station 30 then transmits (or forwards) the object data to the vehicle 100. It will be appreciated that the base station 30 could be replaced by any type of intermediary receiver and transmitter. Thus, in Figure 3 the vehicle 100 indirectly receives object data originating from the objects 12, 20. The object data may be transmitted (and received) via C-V2X communication messages.

It will be appreciated that the vehicle 100 may receive a mixture of direct and indirect object data, depending on the properties of different objects in the environment 10.

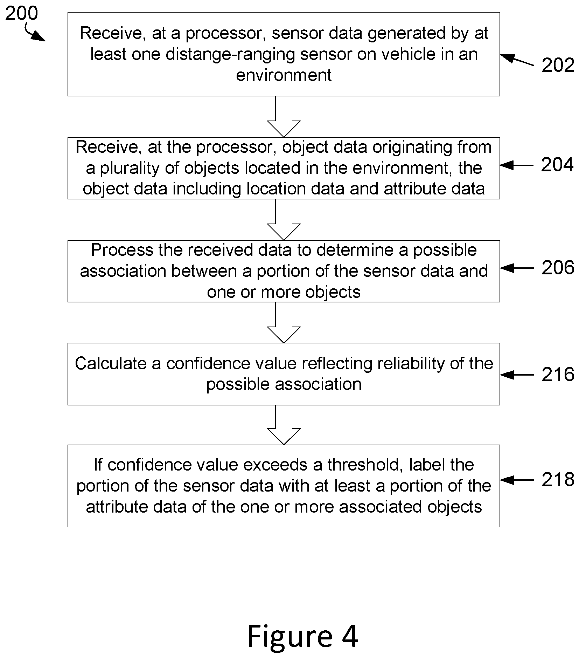

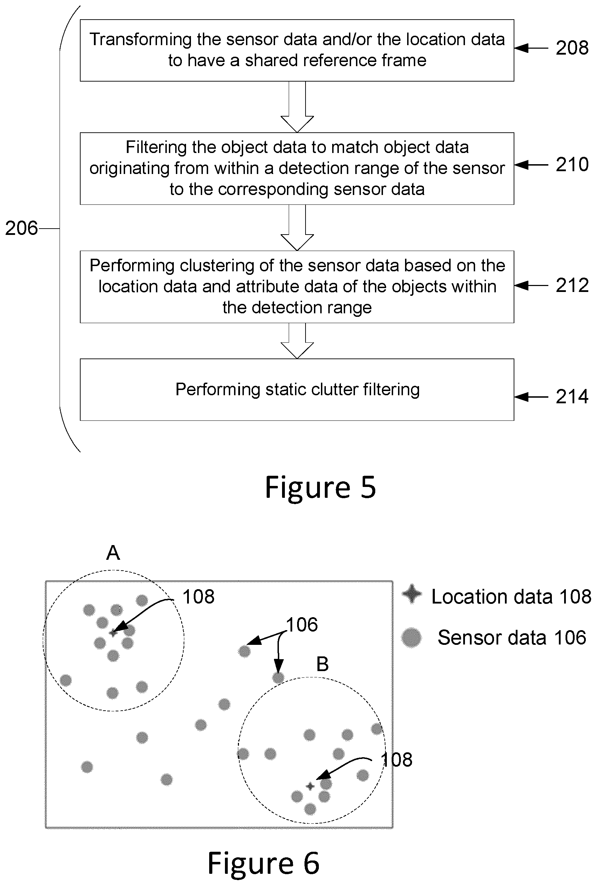

In the present disclosure, the object data, comprising location data and attribute data, is used to label the vehicle sensor data, without requiring the use of expensive cameras, or human intervention to hand label the data. This is more convenient, and reduces costs compared to known methods in the field. This process is shown in Figures 4 and 5.

Figure 4 is a flowchart showing a method 200 of generating labelled vehicle sensor data according to the present disclosure. The method 200 comprises, at step 202, receiving, at a processor, sensor data generated by at least one distance-ranging sensor on a vehicle located in an environment (as shown in Figures 1 to 3). At step 204, the method comprises receiving, at the processor, object data originating from a plurality of objects in the environment (as shown in Figures 1 to 3). The object data includes location data indicating a respective location of each object of the plurality of objects in the environment and attribute data associated with each object of the plurality of objects.

It will be appreciated that steps 202 and 204 may occur concurrently, as the data may be received together. Alternatively, in some embodiments step 204 may occur before step 202.

As shown in Figure 4, the present disclosure does not necessarily require the gathering of the sensor data and the object data to be performed, as this could be performed by a third party, and the data forwarded for processing.

The processor in method 200 may be a plurality of processors. One or more of the processors may be located at the vehicle 100, such that the method 200 is performed at least partially by the vehicle 100. Additionally or alternatively, one or more of the processors may be located remotely to the vehicle, such that the method 200 is at least partially performed by a remote processing resource, such as a remote server or a cloud computing system.

At step 206, the object data and the sensor data is processed together to determine a possible association between a portion of the sensor data and one or more of the objects. A portion of the sensor data may correspond to more than one object. An embodiment of the processing method forming step 206 is described in more detail in connection with Figure 5 below.

At step 216, for each possible association resulting from step 206, a confidence value is determined. The confidence value reflects the reliability of the association. For example, if a region of the sensor data is determined to possibly correspond to a car (e.g. car 16 in Figure 1), then a confidence value is determined to assess the reliability of said region of the sensor data being labelled as corresponding to a car. Methods of determining confidence values are well-known in the art, and any applicable method can be applied in the present disclosure. In some embodiments, the confidence value is a value between 0 and 1, with 1 representing the highest reliability. It will be appreciated that other confidence value systems may have different ranges, such as 0 to 5, or 0 to 100, etc.

At step 218, it is determined whether the confidence value exceeds a given threshold value. The threshold value may vary depending on requirements and depending on the confidence value range in use. If the confidence value exceeds the threshold, then the region of the sensor data is determined to correspond to the one or more associated objects. The region of the sensor data is then labelled with at least a portion of the attribute data of each of the associated objects, for example "car", "pedestrian", "truck", "Ford fiesta ^{®}" etc.

If the confidence value does not exceed the threshold value, then the association between the sensor data and the one or more objects is deemed unreliable and the region of the sensor data is not labelled.

As shown in Figure 5, the method step 206 for determining a possible association between a portion of the sensor data and one or more of the objects may comprise a plurality of processes 208, 210, 212, 214.

At step 208, the sensor data (for sensor(s) 102) and/or the location data from the plurality of objects may be transformed to have a shared reference frame. This allows the location data and the sensor data to be combined, and directly compared, as shown in Figure 6.

At step 210, the object data received is filtered to match object data received from objects located with the detection range 104 of the one or more distance-ranging sensor(s) with the corresponding sensor data. It will be appreciated that, over a given time period, the vehicle 100 may receive object data from objects within a communication range of the vehicle 100. The communication range may be larger than the detection range 104 of the sensor(s) 102. As the present invention is directed to determining one or more identifiers of the objects detected by the sensor(s) 102, it is important to determine which objects were in the detection range 104 of the sensor(s) at the relevant point in time. This can be determined based on the object location data and the known detection range of the sensor(s), following the transformation in step 208. A representation of a selected portion of sensor data, and the filtered object location data, is shown in Figure 6.

At step 212, the processor(s) perform clustering of the sensor data based on the location data and attribute data of the objects determined to be within the detection range of the sensor(s). Clustering, or clustering analysis, is a process whereby data points are grouped such that data points in the same group or cluster meet predefined criteria. In this application, based on the location data for an object, and the attribute data of said object, expected sensor data corresponding to the object can be predicted. At step 212, the sensor data is processed to determine which of the data points appear to correspond to the expected sensor data of an obj ect.

The clustering process 212 may also involve using range Doppler, angle, and other attributes of the data. The clustering is typically based on distance criteria, such as Euclidean distance or Manhattan distance. The clustering process 212 includes applying a clustering algorithm to the filtered data resulting from step 210. Various suitable clustering algorithms are known in the art. In some embodiments, the clustering process 212 may include using a Density-based spatial clustering of applications with noise (DBSCAN) algorithm, which is a well-known clustering algorithm. However other clustering algorithms such as Fuzzy c-means can be leveraged based on clustering requirements.

In an example, a first object has a location 108 within region A in Figure 6 and a second object has a location 108 in region B in Figure 6. The sensor data points surrounding each location 108 are processed using clustering, based on the corresponding object data, to determine if the data points may have been generated by the respective object.

In addition to the location data, the first object in region A has associated attribute data, which may include at least one identifier. In this example (for purely illustrative purposes as opposed to any actual data), the identifier indicates that the object is a motorbike. The attribute data further includes a speed of the motorbike and an orientation of the motorbike. Based on this attribute data (i.e. a motorbike, at a given orientation, having a given speed), the processor can determine an expected radar cross-section (RCS) for the first object. This expected RCS can be used during the clustering process 212 to assist in determining which data points may correspond to the first object.

The clustering process 212 may involve using pattern matching techniques between the expected (or predicted) sensor data for an object and the received sensor data and object data. Pattern matching may be used to match a portion of the sensor data to a trajectory of an object detailed in the object data received. In one non-limiting example, a trajectory of a centroid (generated from the sensor point cloud data) may be mapped on to the received location data of the objects (received via communication messages).

If more attribute data is received for an object, or more detailed attribute data is received regarding a plurality of different attributes of the object, this improves the reliability/accuracy of the clustering process, as the additional information builds a clearer picture as to what sensor data should have been generated by the object interacting with the distance-ranging sensor(s).

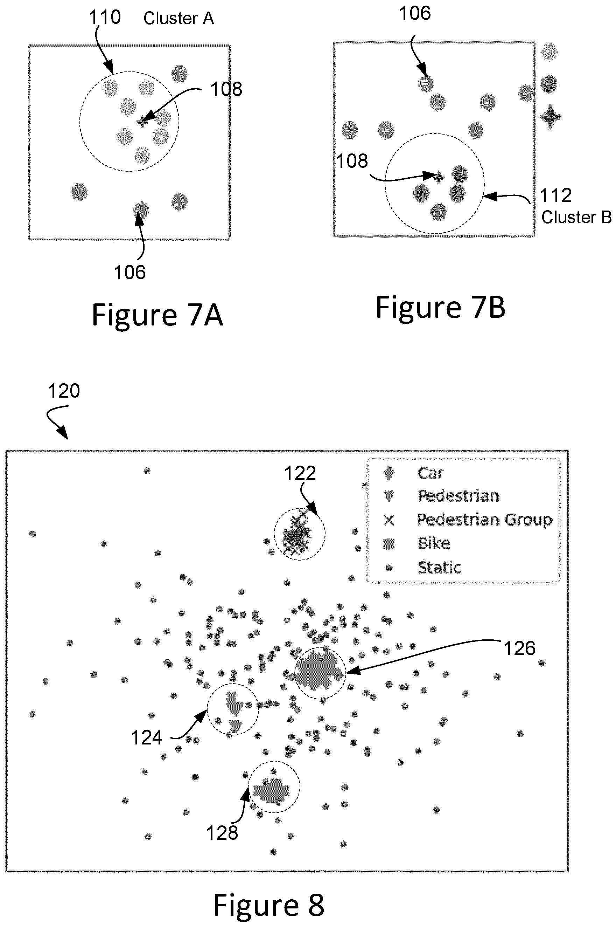

Figure 7A shows an example of the data in region A of Figure 6 post clustering, wherein the sensor data points in area 110 are determined to form Cluster A corresponding to the first object at location 108. The other sensor data points 106 are not determined to be associated with the first object.

Figure 7B shows an example of the data in region B of Figure 6 post clustering, wherein the sensor data points in area 112 are determined to form Cluster B corresponding to the second object at location 108. The other sensor data points 106 are not determined to be associated with the second object.

The method step 206 may further include performing static clutter filtering 214. Static clutter filtering 214 may remove any sensor data points 106 that are not determined to be associated with one or more of the plurality of objects. The static cluster filtering 214 could also be carried out after step 208. The purpose of step 214 (static cluster filtering) is then to remove any sensor data points that are stationary, before performing further filtering with a detection region (210).

It will be appreciated that the sensor data and the object data received is time dependent, the data being associated with a respective time indication. In practice, the sensor data and the object data will usually be received in frames, each frame having a respective time indication. For example, the data shown in Figures 6 and 7A, 7B correspond to a first frame associated with a first point in time. In some embodiments, the clustering process 212 may be performed using data from a plurality of frames, such that the analysis is performed over a given time period.

For example, if an object has a known speed (as part of the attribute data), then the expected sensor data may have a predicted trajectory or shape. By analyzing the data received in a plurality of frames, the processor can determine if the data points are likely to belong to the expected trajectory or shape, or not.

Figure 8 provides an example of labelled vehicle sensor data 120, following completion of the method 200 (e.g. after the confidence values have been determined and compared to the threshold). The labels (car, pedestrian, pedestrian group, bike, static) correspond to at least a portion of the attribute data (e.g. identifiers) of the object(s) determined to have generated the associated sensor data. The group or cluster labelled as 122 is determined to correspond to a pedestrian group (e.g. multiple pedestrians), the group or cluster 124 is determined to correspond to a single pedestrian, the group or cluster 126 is determined to correspond to a car, and the group or cluster 128 is determined to correspond to a bike (e.g. a pushbike or a cyclist). The other data points are determined to be static, which in other embodiments may be removed from the labelled sensor data 120.

It will be appreciated that although Figure 8 shows the labelled sensor data 120 as comprising labels specifying just the type or classification of the respective object, other attribute data, or additional attribute data could be used as labels within the scope of the present disclosure. For example, at least one label may include additional attribute data indicating one or more additional attributes of the object, such as (but not limited to), speed, position, dimensions, or more detailed object information such as a specific make or model of vehicle. In another example, at least one object may not include an object type, but other attribute data, such as object size, speed, etc.

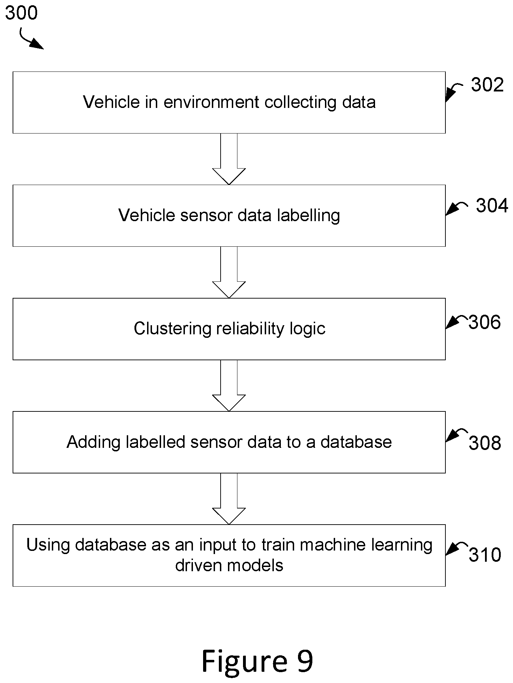

The labelled vehicle sensor data 120 may be added to a database, as shown in Figure 9.

Figure 9 illustrates a method 300 according to another embodiment of the present disclosure. The method 300 includes the step 302 of obtaining the vehicle sensor data and the object data from the environment (as shown in Figure 1 to 3).

At step 304 the vehicle sensor data is provisionally labelled, as defined in method steps 202 to 214 described above.

At step 306, clustering reliability logic is applied (i.e. steps 216, 218) to calculate confidence values for each provisional label and assess if the confidence value exceeds a predetermined threshold. The label is only applied to the sensor data if the confidence value exceeds the threshold.

At step 308, the final labelled sensor data is added to a database. At step 310, this database is used as an input to train one or more machine learning drive models, or machine learning systems.

Thus, the method 200 (including steps 208 to 214), and method steps 304, 306 and 308, is a computer-implemented method carried out by a computer, or a computing system. The computer or computer system comprises at least one processor and memory, the memory configured to store instructions to be executed by the at least one processor. At least part of the computing system may be configured to be integrated into a vehicle. In some embodiments, the computing system may comprise a plurality of computing devices or processing resources that are communicatively coupled together. A first computing device may be integrated into a vehicle 100, and at least one second computing device may be provided remotely to the vehicle 100. The first and second computing devices may be different types of computing device.

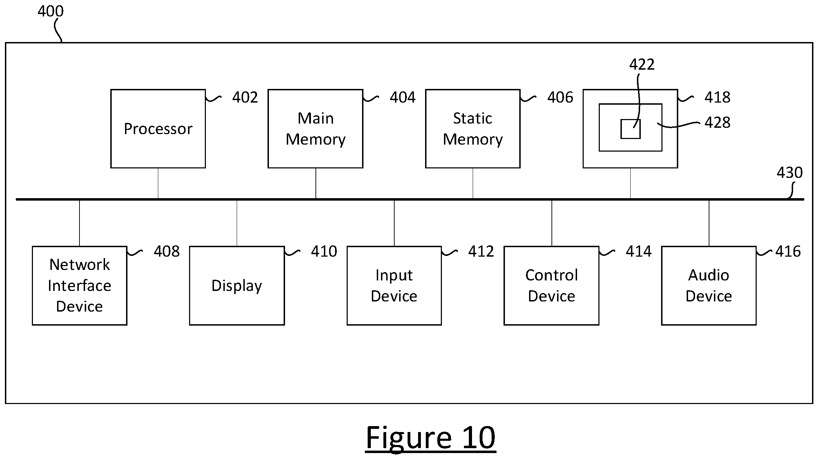

Figure 10 is a block diagram of one example implementation of a computing device 400 according to an embodiment of the present disclosure. The computing device 400 is associated with executable instructions for causing the computing device to perform any one or more of the methodologies discussed herein.

In some implementations, the computing device 400 may be connected (e.g., networked) to other machines in a Local Area Network (LAN), an intranet, an extranet, or the Internet. The computing device may operate in the capacity of a server or a client machine in a client-server network environment, or as a peer machine in a peer-to-peer (or distributed) network environment. The computing device may be a personal computer (PC), a tablet computer, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single computing device is illustrated, the term "computing device" shall also be taken to include any collection of machines (e.g., computers) that individually or jointly execute a set (or multiple sets) of instructions to perform any one or more of the methodologies discussed herein.

The example computing device 400 includes a processing device 402, a main memory 404 (e.g., read-only memory (ROM), flash memory, dynamic random-access memory (DRAM) such as synchronous DRAM (SDRAM) or Rambus DRAM (RDRAM), etc.), a static memory 406 (e.g., flash memory, static random-access memory (SRAM), etc.), and a secondary memory (e.g., a data storage device 418), which communicate with each other via a bus 430.

Processing device 402 represents one or more general-purpose processors such as a microprocessor, central processing unit, or the like. More particularly, the processing device 402 may be a complex instruction set computing (CISC) microprocessor, reduced instruction set computing (RISC) microprocessor, very long instruction word (VLIW) microprocessor, processor implementing other instruction sets, or processors implementing a combination of instruction sets. Processing device 402 may also be one or more special-purpose processing devices such as an application specific integrated circuit (ASIC), a field programmable gate array (FPGA), a digital signal processor (DSP), network processor, or the like. Processing device 402 is configured to execute the processing logic (instructions 422) for performing the operations and steps discussed herein.

The computing device 400 may further include a network interface device 408. The computing device 400 also may include a video display unit 410 (e.g., a liquid crystal display (LCD) or a cathode ray tube (CRT)), an alphanumeric input device 412 (e.g., a keyboard or touchscreen), a cursor control device 414 (e.g., a mouse or touchscreen), and an audio device 416 (e.g., a speaker).

The data storage device 418 may include one or more machine-readable storage media (or more specifically one or more non-transitory computer-readable storage media) 428 on which is stored one or more sets of instructions 422 embodying any one or more of the methodologies or functions described herein. The instructions 422 may also reside, completely or at least partially, within the main memory 404 and/or within the processing device 402 during execution thereof by the computer system 400, the main memory 404 and the processing device 402 also constituting computer-readable storage media.

As such, the various methods described above may be implemented by a computer program. The computer program may include computer code arranged to instruct a computer to perform the functions of one or more of the various methods described above. The computer program and/or the code for performing such methods may be provided to an apparatus, such as a computer, on one or more computer readable media or, more generally, a computer program product. The computer readable media may be transitory or non-transitory. The one or more computer readable media could be, for example, an electronic, magnetic, optical, electromagnetic, infrared, or semiconductor system, or a propagation medium for data transmission, for example for downloading the code over the Internet. Alternatively, the one or more computer readable media could take the form of one or more physical computer readable media such as semiconductor or solid-state memory, magnetic tape, a removable computer diskette, a random-access memory (RAM), a read-only memory (ROM), a rigid magnetic disc, and an optical disk, such as a CD-ROM, CD-R/W or DVD.

In an implementation, the modules, components and other features described herein can be implemented as discrete components or integrated in the functionality of hardware components such as ASICS, FPGAs, DSPs or similar devices.

A "hardware component" is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may be or include a special-purpose processor, such as a field programmable gate array (FPGA) or an ASIC. A hardware component may also include programmable logic or circuitry that is temporarily configured by software to perform certain operations.

Accordingly, the phrase "hardware component" should be understood to encompass a tangible entity that may be physically constructed, permanently configured (e.g., hardwired), or temporarily configured (e.g., programmed) to operate in a certain manner or to perform certain operations described herein.

In addition, the modules and components can be implemented as firmware or functional circuitry within hardware devices. Further, the modules and components can be implemented in any combination of hardware devices and software components, or only in software (e.g., code stored or otherwise embodied in a machine-readable medium or in a transmission medium).

Unless specifically stated otherwise, as apparent from the following discussion, it is appreciated that throughout the description, discussions utilising terms such as "providing", "calculating", "computing," "identifying", "detecting ", "establishing" , "training", "determining", "storing", "generating" ,"checking", "obtaining" or the like, refer to the actions and processes of a computer system, or similar electronic computing device, that manipulates and transforms data represented as physical (electronic) quantities within the computer system's registers and memories into other data similarly represented as physical quantities within the computer system memories or registers or other such information storage, transmission or display devices.

Accordingly, there has been described computer- implemented methods for generating labelled vehicle sensor data, and systems for carrying out such methods.

In particular, there has been described a computer-implemented method of generating labelled vehicle sensor data, comprising: receiving, at a processor, sensor data generated by at least one distance-ranging sensor on a vehicle within an environment; receiving, at the processor, object data received at the vehicle, the object data originating from a plurality of objects located within the environment, wherein the object data comprises location data indicating a respective location of each object of the plurality of objects in the environment and attribute data associated with each object of the plurality of objects; processing the sensor data and the object data to determine a possible association between a respective portion of the sensor data and at least one object of the plurality of objects; calculating a confidence value reflecting the reliability of the possible association; in response to the confidence value exceeding a confidence threshold, labelling the respective portion of the sensor data with the at least a portion of the attribute data associated with the at least one object.

Although particular embodiments of this disclosure have been described, it will be appreciated that many modifications/additions and/or substitutions may be made within the scope of the claims.

## Claims

1. A computer-implemented method of generating labelled vehicle sensor data, comprising:
receiving, at a processor, sensor data generated by at least one distance-ranging sensor provided on a vehicle within an environment;
receiving, at the processor, object data received at the vehicle, the object data originating from a plurality of objects located within the environment, wherein the object data comprises location data indicating a respective location of each object of the plurality of objects in the environment and attribute data associated with each respective object of the plurality of objects;
processing the sensor data and the object data to determine a possible association between a respective portion of the sensor data and at least one object of the plurality of objects;
calculating a confidence value reflecting a reliability of the possible association;
in response to the confidence value exceeding a confidence threshold, labelling the respective portion of the sensor data with at least a portion of the attribute data of the at least one object.

2. The computer-implemented method of claim 1, wherein in response to the confidence value exceeding a confidence threshold the method further comprises:
adding the labelled sensor data to a database.

3. The computer-implemented method of claim 1 or claim 2, wherein the attribute data further comprises one or more of:
an object type or an object classification;
an object characteristic or an object property;
an object identifier;
dimensional data;
speed data or velocity data; and/or
positional data or orientation data.

4. The computer-implemented method of any preceding claim, wherein the sensor data includes one or more of:
point cloud data;
range data;
range-Doppler data;
azimuth angle data;
elevation data; and/or
analog-to-digital converter, ADC, data.

5. The computer-implemented method of any preceding claim, wherein processing the sensor data and the object data to determine a possible association between a respective portion of the sensor data and at least one object of the plurality of objects comprises:
transforming at least one of the sensor data and the location data to have a shared reference frame, thereby allowing the location data to be combined with the sensor data.

6. The computer-implemented method of any preceding claim, wherein the at least one distance-ranging sensor has a known detection range and processing the sensor data and the object data to determine a possible association between a respective portion of the sensor data and at least one object of the plurality of objects further comprises:
filtering the object data to match object data originating from objects located within the detection range of the at least one distance-ranging sensor to the corresponding sensor data.

7. The computer-implemented method of claim 6, wherein processing the sensor data and the object data to determine a possible association between a respective portion of the sensor data and at least one object of the plurality of objects further comprises:
clustering the sensor data based on the respective object data associated with each object in the detection range of the at least one distance-ranging sensor.

8. The computer-implemented method of claim 7, wherein:
the sensor data and object data received each has an associated time indication, and said clustering is performed using sensor data and object data associated with a plurality of different time indications.

9. The computer-implemented method of claim 7 or claim 8, further comprising:
filtering the sensor data to remove data determined to be associated with static clutter; or
filtering the sensor data to remove data that is determined to not be associated with an object of the plurality of objects.

10. The computer-implemented method of any preceding claim, wherein the object data is received via V2X communication messages and/or C-V2X communication messages.

11. The computer-implemented method of any preceding claim, wherein the at least one distance-ranging sensor comprises one or more of:
a radar sensor;
a LiDAR sensor; and/or
an ultrasound sensor.

12. The computer-implemented method of any preceding claim, wherein the sensor data is real-world data generated by the vehicle within a real-world environment and the object data is real-world data received from objects within the real-world environment.

13. A method comprising:
capturing sensor data using at least one distance-ranging sensor provided on a vehicle within an environment;
receiving, at the vehicle, object data originating from a plurality of objects located within the environment, wherein the object data comprises location data indicating a respective location of each object of the plurality of objects in the environment and attribute data associated with each object of the plurality of objects; and
generating labelled vehicle sensor data according to any preceding claim.

14. A computing system comprising:
at least one processor; and
memory, wherein the memory comprises instructions which, when executed by the processor, cause the processor to carry out the method of any of claims 1 to 12.

15. A vehicle, comprising:
at least one distance-ranging sensor configured to generate sensor data;
at least one processor communicatively coupled to the at least one distance-ranging sensor; and
memory, wherein the memory comprises instructions which, when executed by the processor, cause the processor to carry out the method of any of claims 1 to 12.
